# EUROPÄISCHE PATENTANMELDUNG

(11) **EP 1 650 007 A2**
(43) Veröffentlichungstag der Anmeldung: **26.04.2006**
(21) Anmeldenummer: 05022786.7
(22) Anmeldetag: 19.10.2005
(51) Int. Cl.: B29C 47/12, B29C 47/22

(54) **Vorrichtung zur Herstellung von Hohlsträngen aus thermoplastischem Material**

(30) Priorität: 19.10.2004 DE 102004051088
(71) Anmelder: INOEX GmbH, 32547 Bad Oeynhausen (DE)
(72) Erfinder: Dr. Schmuhl, Jörg, 15711 Königs Wusterhausen (DE); Dr. Graf, Hans Erhard, 19073 Wittenförden (DE); Klose, Reinhard, 31737 Rinteln (DE)
(74) Vertreter: Seewald, Jürgen

(57) **Zusammenfassung**

Die vorliegende Erfindung betrifft eine Vorrichtung zur Herstellung von Hohlsträngen aus thermoplastischem Material mit einem Extruder und einem am Ausgang des Extruders angeordneten Werkzeug (1), bestehend aus einem Dorn (2) und einem diesen unter Belassung eines Durchtrittsspalts (4) für die Schmelze umgebenden Mantels (3), wobei der Dorn (2) aus einer in Extrusionsrichtung gesehen rückseitigen Stützhülse (6) und einem vorderseitigen Dornkopf (7) besteht, der mit einer rückseitigen Kalottenfläche (8) auf einem kreisförmigen, vorderseitigen Rand (9) der Stützhülse (6) beweglich gehaltert ist und dessen größter Durchmesser (D) größer als der Außendurchmesser (d) der Stützhülse (6) ist. Aufgabe der vorliegenden Erfindung ist es, eine derartige Vorrichtung unter Beibehaltung ihrer Wirksamkeit im Aufbau wesentlich einfacher und damit kostengünstiger zu gestalten. Gelöst wird diese Aufgabe dadurch, dass der Dornkopf (7) derart auf der Stützhülse (6) gelagert ist, dass er allein durch die auf ihn aus der Schmelze wirkenden Kräfte verkippbar ist.

## Beschreibung

Die vorliegende Erfindung betrifft eine Vorrichtung zur Herstellung von Hohlsträngen aus thermoplastischem Material gemäß dem Oberbegriff des Anspruchs 1.

Eine derartige Vorrichtung ist aus der DE 20 2004 006 793 U1 bekannt.

Bei der Extrusion von Hohlsträngen sind stets Wanddicken-Unterschiede in Umfangsrichtung des Extrudats zu verzeichnen, auch dann, wenn der Dorn exakt zentrisch im Mantel des Werkzeugs sitzt. Diese Unterschiede in der Wandstärke resultieren daraus, dass die Schmelze, z.B. durch unsymmetrische Beheizung, nicht vollständig homogen ist, woraus unterschiedliche Fließgeschwindigkeiten über den Umfang gesehen vorliegen. Darüber hinaus fließt die Schmelze schwerkraftbedingt bevorzugt zum untersten Punkt des Durchtrittsspalts, was zu einer lokalen Erhöhung der Wanddicke auf der Unterseite des produzierten Hohlstranges führt. Diese Mängel werden durch die aus der DE 20 2004 006 793 U1 bekannten. Vorrichtung beseitigt bzw. zumindest stark abgemindert. Durch Verkippen des Dornkopfes auf der Stützhülse kann bei dieser Lösung der Durchtrittsspalt abschnittsweise verstellt werden, so dass eine gezielte Änderung einer lokal vom Sollwert abweichenden Wandstärke des Hohlstranges möglich ist. Die Verkippung des Dornkopfes auf der Stützhülse erfolgt dabei über Stellmittel, die durch die Stützhülse geführt sind und von hinten an den Dornkopf angreifen.

Aufgabe der vorliegenden Erfindung ist es, eine gattungsgemäße Vorrichtung unter Beibehaltung ihrer Wirksamkeit im Aufbau wesentlich einfacher und damit kostengünstiger zu gestalten.

Diese Aufgabe wird erfindungsgemäß mit einer Vorrichtung gelöst, die die Merkmale des Anspruchs 1 aufweist.

Ideale Strömungsverhältnisse vorausgesetzt, d.h. die Strömungsgeschwindigkeit der Schmelze ist an jedem Ort des Umfangs im Durchtrittsspalt gleich groß, sitzt der Dornkopf zentriert auf der Stützhülse, da sich die aus der Schmelze auf seine in die Strömung hineinragende Flankenfläche wirkenden Fließkräfte auf den Umfang gesehen gegenseitig aufheben. Solche idealen Strömungsverhältnisse liegen in der Praxis jedoch nie vor, was, wie oben schon ausgeführt, zu Wanddicken-Unterschieden des produzierten Hohlstranges in Umfangsrichtung führt. Die erfindungsgemäße Vorrichtung schafft hier einen gewissermaßen natürlichen Ausgleich. Wenn die Strömungsgeschwindigkeit in der Schmelze an einem Ort bzw. in einem Bereich des Durchtrittsspalts größer als auf dem übrigen Umfang ist, was zu einer größeren Wandstärke in diesem Bereich führt, ist die auf die Flankenfläche des Dornkopfes in diesem Bereich aus der Schmelze wirkende Kräfteresultierende größer als auf dem übrigen Umfang. Dadurch kippt der Dornkopf auf der Stützhülse, so dass sich der Durchtrittsspalt in dem Bereich geringerer Strömungsgeschwindigkeit vergrößert, mit anderen Worten, der Massendurchsatz erhöht sich in diesem Bereich. Auf diese Weise werden Wandstärkenschwankungen des Hohlstrangs in Umfangsrichtung ausgeglichen. Apparative Verstellmechanismen für den Dornkopf sind nicht erforderlich, was gegenüber dem Stand der Technik zu einer Vereinfachung der Vorrichtung führt. Es versteht sich von selbst, dass die Halterung des Dornkopfes auf der Stützhülse so ausgebildet ist, dass die auf den Dornkopf wirkenden Haltekräfte kleiner sind als die auf ihn wirkenden Verstellkräfte der Schmelze.

Weitere vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt in rein schematischer Weise:
- Fig. 1: das vordere Ende eines Extrusionswerkzeugs im Längsschnitt bei in zentrierter Stellung befindlichem Dornkopf,
- Fig. 2: eine Darstellung gemäß Fig. 1 bei in einer maximalen Verkippstellung befindlichem Dornkopf,
- Fig. 3: eine Darstellung gemäß Fig. 1 bei in einer anderen maximalen Verkippstellung befindlichem Dornkopf,
- Fig. 4: das vordere Ende eines Extrusionswerkzeugs nach einer zweiten Ausführungsform der Erfindung im Längsschnitt bei konzentrisch im Mantel angeordnetem hinteren Abschnitt des Dorns und bei in zentrierter Stellung befindlichem Dornkopf,
- Fig. 5: eine Darstellung gemäß Fig. 4 bei in maximaler Verkippstellung gemäß Fig. 2 befindlichem Dornkopf,
- Fig. 6: eine Darstellung gemäß Fig. 4 bei in maximaler Verkippstellung gemäß Fig. 3 befindlichem Dornkopf,

- Fig. 7: eine Darstellung gemäß Fig. 4 bei exzentrisch im Mantel angeordnetem hinteren Abschnitt des Dorns und bei in zentrierter Stellung befindlichem Dornkopf,
- Fig. 8: eine Darstellung gemäß Fig. 7 bei in maximaler Verkippstellung gemäß Fig. 2 befindlichem Dornkopf, und
- Fig. 9: eine Darstellung gemäß Fig. 7 bei in maximaler Verkippstellung gemäß Fig. 3 befindlichem Dornkopf.

Das Extrusionswerkzeug 1 besteht aus einem Dorn 2 und einem diesen umgebenden Mantel 3, wobei zwischen Dorn 2 und Mantel 3 ein ringförmiger Durchtrittsspalt 4 gebildet ist. Die Strömungsrichtung der Schmelze durch den Durchtrittsspalt 4 ist durch die Pfeile 5 angegeben. Der Dorn 2 besteht aus zwei Teilen, einer Stützhülse 6 und einem Dornkopf 7. Der Dornkopf 7 ist als Halbkugelschale ausgeführt und lagert mit seiner rückseitigen Kalottenfläche 8 auf einem kreisförmigen, vorderseitigen Rand 9 der Stützhülse 6.

Der Dornkopf 7 besitzt in seinem Zentrum eine Aussparung 10, die von einem der Halterung des Dornkopfes 7 auf der Stützhülse 6 dienenden Zugstab 11 durchsetzt ist. Das eine Ende des Zugstabes 11 ist in die Stützhülse 6 eingeschraubt und durch eine Mutter 12 gekontert. Auf das andere Ende des Zugstabs 11 ist eine Kalotte 13 aufgesteckt, die dazu mit einer entsprechenden Durchgangsbohrung versehen ist. Die Kalotte 13 überbrückt die Ausnehmung 10 des Dornkopfes 7 und liegt mit ihrer Kugelfläche 14 auf der inneren Kugelfläche 15 des Dornkopfes 7 an. Sie bildet ein Gegenlager für den an der rückseitigen Kalottenfläche 8 des Dornkopfes 7 anliegenden Rand 9 der Stützhülse 6. Der Anpressdruck der Kalotte 13 an den Dornkopf 7 wird mit einer Mutter 16 eingestellt, die auf den Zugstab 11 aufgeschraubt ist, und mit ihrer rückseitigen Stirnfläche auf der Kalotte 13 aufliegt. Der größte Durchmesser D des Dornkopfes 7 ist größer als der Außendurchmesser d der Stützhülse 6. Daher ragt eine Flankenfläche 17 des Dornkopfes 7 in den Strömungsweg der Schmelze.

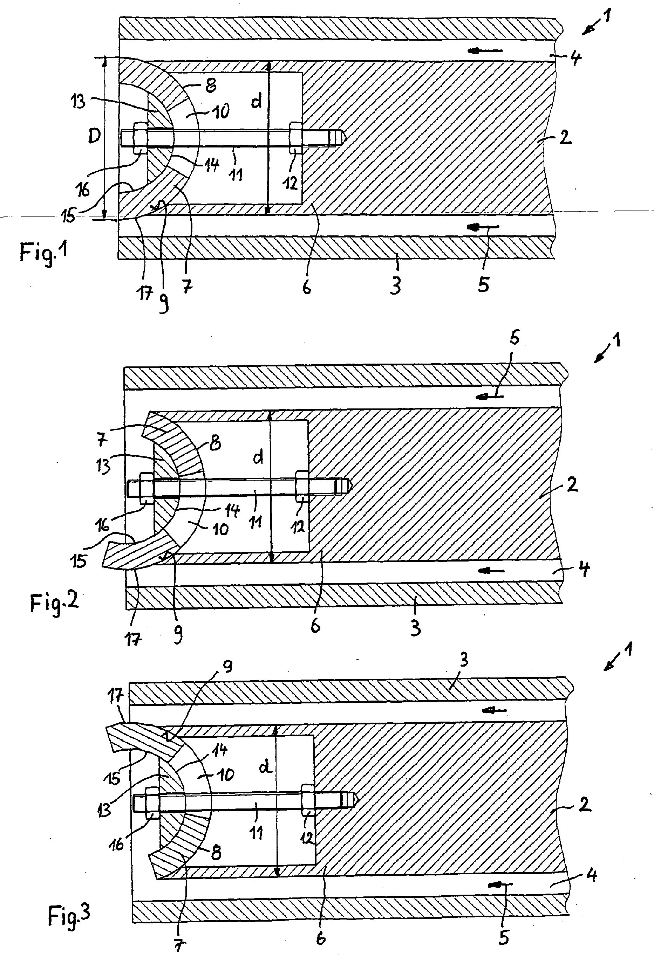

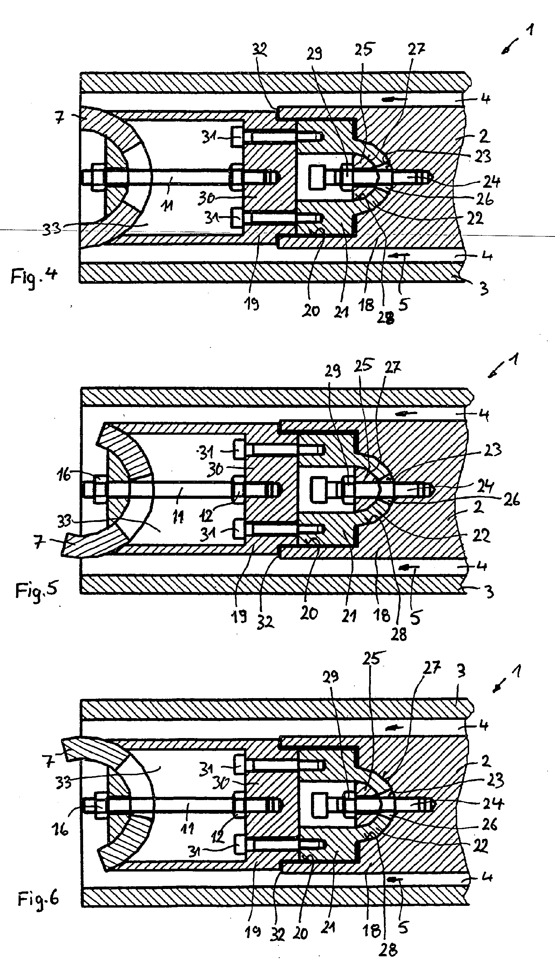

Fig. 1 zeigt einen zentrierten Einbauzustand des Dornkopfes 7. In diesem Zustandwragt die Flankenfläehe 17 des Dornkopfes 7 in Umfangsrichtung völlig gleichförmig in den Strömungsweg der Schmelze. Dieser zentrierte Einbauzustand würde bei gleichen Strömungsverhältnissen in Umfangsrichtung beibehalten werden, da die auf die Flankenfläche 17 aus der Schmelze wirkenden Fließkräfte gleichmäßig auf dem Umfang verteilt sind. In der Praxis liegen aber immer unterschiedliche Strömungsverhältnisse im Durchtrittsspalt 4 vor, so dass es zu einer ungleichmäßigen Beaufschlagung der Flankenfläche 17 kommt.

Fig. 2 zeigt eine Situation, in der die Fließgeschwindigkeit der Schmelze im unteren Bereich des Durchtrittsspalts 4 größer ist als am übrigen Umfang. Der Dornkopf 7 verschwenkt daher auf dem ringförmigen Rand 9 der Stützhülse 6 im Uhrzeigersinn. Dadurch wird der Durchtrittsspalt 4 im oberen Bereich vergrößert, so dass dort ein größerer Massendurchsatz als vorher erreicht wird, der einen Ausgleich der Wanddicken-Schwankung in Umfangsrichtung bewirkt. Fig. 2 zeigt eine Maximalverkipplung des Dornkopfes 7, bei der die Flankenfläche 17 im oberen Bereich des Durchtrittsspalts 4 vollständig in die Stützhülse 6 eingetaucht ist. Im unteren Bereich bleibt der Durchtrittsspalt 4 unverändert, da der Dornkopf 7 als Halbkugel gestaltet ist. An dieser Stelle sei erwähnt, dass die Flankenfläche 17 natürlich auch von einer Kugelflächenform abweichen kann, sofern sie beim Verkippen nicht mit dem Rand 9 der Stützhülse 6 in Berührung kommt. So kann die Flankenfläche 17 zum Beispiel auch kegelförmig ausgeführt werden.

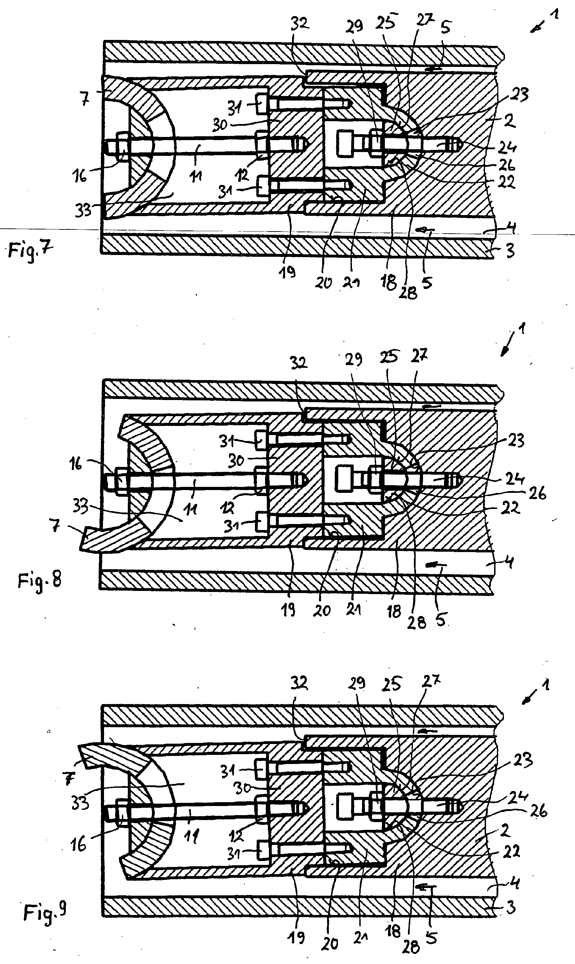

Fig. 3 zeigt den Dornkopf 7 in einer anderen maximalen Verkippstellung, die der Stellung gemäß Fig. 2 diametral gegenüber liegt. In diesem Fall ist also die Fließgeschwindigkeit der Schmelze im oberen Bereich des Durchtrittsspalts 4 größer als im übrigen Bereich.

Neben den in den Fig. 2 und 3 gezeigten maximalen Verkippstellungen sind natürlich auch Zwischenstellungen des Dornkopfes 7 möglich, je nach dem, wie die Strömungsverhältnisse im Durchtrittsspalt 4 ausgebildet sind.

Um ein Verkippen des Dornkopfes 7 auf der Stützhülse 6 durch die Fließkräfte der Schmelze zu gewährleisten, ist die Mutter 16 auf dem Zugstab 11 nur so stark angezogen, dass die auf den Dornkopf 7 wirkenden Haltekräfte kleiner sind als die auf ihn aus der Schmelze wirkenden Kräfte.

Mit dem oben beschriebenen Dornkopf 7 erfolgt eine Feinkorrektur von Wandstärke-Schwankungen des produzierten Hohlstrangs in Umfangsrichtung. Sie setzt voraus, dass der Dorn 2 konzentrisch im Mantel 3 sitzt. Tatsächlich ist dies in der Praxis auf Grund von Einbautoleranzen nie oder nur selten der Fall. Daher ist in einem weiteren Ausführungsbeispiel zusätzlich zum Dornkopf 7 ein Verstellmechanismus vorgesehen, der für eine selbsttätige Zentrierung des Durchtrittsspalts 4 sorgt. Dazu besteht der Dorn 2 aus einem hinteren Abschnitt 18 und einem vorderen Abschnitt 19.

Am vorderen Ende des hinteren Abschnitts 18 ist eine zylindrische Aussparung 20 vorgesehen, die mit radialem Spiel einen zylindrischen Lagerblock 21 aufnimmt. An seinem hinteren Ende geht der Lagerblock 21 in eine Halbkugelschale 22 über, die in eine entsprechende halbkugelförmige Ausnehmung 23 des hinteren Abschnitts 18 eingreift. Der Lagerblock 21 ist über eine Schraube 24 am hinteren Abschnitt 18 des Dorns 2 befestigt. Die Schraube 24 durchgreift eine mit einer Durchgangsbohrung versehene Kalotte 25 und eine Öffnung 26 in der Halbkugelschale 22 und ist in den hinteren Abschnitt 18 eingeschraubt. Die Kalotte 25 überbrückt die Öffnung 26 der Halbkugelschale 22 und liegt mit ihrer Kugelfläche 27 an der inneren Kugelfläche 28 der Halbkugelschale 22 an. Sie bildet ein Gegenlager für die Kugelfläche 23 des hinteren Abschnitts 18. Der Anpressdruck der Kalotte 25 an die Halbkugelschale 22 wird mit einer Mutter 29 eingestellt, die auf die Schraube 24 aufgeschraubt ist und mit ihrer rückseitigen Stirnfläche auf der Kalotte 25 aufliegt.

Der vordere Abschnitt 19 des Dornkopfes 2 ist über seinen Boden 30 durchsetzende Schrauben 31 am Lagerblock 21 befestigt. Am Übergang zum Lagerblock 21 hat der vordere Abschnitt 19 zunächst den Außendurchmesser des Lagerblocks 21, um dann mit geringem axialen Spiel zum vorderen Rand 32 des hinteren Abschnitts 18 auf einen größeren Außendurchmesser vorzuspringen, der bis zum vorderen Ende des vorderen Abschnitts 19 konstant beibehalten wird. Der vordere Abschnitt 19 des Dorns 2 ist insgesamt becherförmig ausgeführt, indem er eine sich nach vom öffnende Ausnehmung 33 aufweist. Diese Ausnehmung 33 dient der Gewichtsreduzierung des vorderen Abschnitts 19 sowie dem Zugang zu den Befestigungsschrauben 31.

Das radiale Spiel zwischen dem Lagerblock 21 und der zylindrischen Ausnehmung 20 im hinteren Abschnitt 18 des Dorns 2 und das axiale Spiel zwischen dem vorderen Rand 32 des hinteren Abschnitts 18 und dem vorderen Abschnitt 19 sind so gewählt, dass der vordere Abschnitt 19 begrenzt in allen radialen Richtungen am hinteren Abschnitt 18 verschwenkbar ist.

Die Fig. 4 bis 6 zeigen eine ideale Einbausituation des Dorns 2 im Mantel 3. Aus diesen Abbildungen ist ersichtlich, dass der hintere Abschnitt 18 des Dorns 2 konzentrisch im Mantel 3 angeordnet ist, d.h. der ihn umgebende Durchtrittsspalt 4 hat in Umfangsrichtung überall die gleiche lichte Weite. Die Strömungsverhältnisse der Schmelze sind daher in Umfangsrichtung im wesentlichen gleichmäßig, so dass der vordere Abschnitt 19 über seine gesamte Länge ebenfalls eine konzentrische Anordnung zum Mantel 3 einnimmt. Eine derartige Einbausituation des Dorns 2 kommt aber in der Praxis gar nicht oder nur selten vor.

Typisch sind exzentrische Einbaulagen des Dorns 2 im Mantel 3. Eine derartige exzentrische Einbaulage des Dorns 2 ist in den Fig. 7 bis 9 beispielhaft gezeigt. Hier ist der Durchtrittsspalt 4 im oberen Bereich kleiner als im unteren Bereich. Daraus resultieren höhere Strömungsgeschwindigkeiten der Schmelze im oberen Bereich als im unteren Bereich des Durchtrittsspalts 4. Der vordere Abschnitt 19 des Dorns 2 gleicht die unterschiedlichen Strömungsgeschwindigkeiten und damit die unterschiedlichen Massendurchsätze aus, indem er in Richtung der geringeren Strömungsgeschwindigkeiten verschwenkt. An seinem vorderen Ende liegt dann ein Durchtrittsspalt 4 mit in Umfangsrichtung im wesentlichen gleicher lichter Weite vor.

Um ein radiales Verschwenken des vorderen Abschnitts 19 am hinteren Abschnitt 18 des Dorns 2 durch die Fließkräfte der Schmelze zu gewährleisten, ist die Mutter 29 auf der Schraube 24 nur so stark angezogen, dass die über den Lagerblock 21 auf den vorderen Abschnitt 19 wirkenden Haltekräfte kleiner sind als die auf ihn aus der Schmelze wirkenden Kräfte.

In dem Ausführungsbeispiel gemäß den Fig. 4 bis 9 ist der Zugstab 11 in den Boden 30 des vorderen Abschnitts 19 eingeschraubt. Ansonsten entspricht die Halterung des Dornkopfes 7 der des ersten Ausführungsbeispiels gemäß den Fig. 1 bis 3. Zu den in den Fig. 4 bis 9 gezeigten Stellungen des Dornkopfes 7 wird zur Vermeidung von Wiederholungen auf die Ausführungen zum ersten Ausführungsbeispiel verwiesen.

## Patentansprüche

1. Vorrichtung zur Herstellung von Hohlsträngen aus thermoplastischem Material mit einem Extruder und einem am Ausgang des Extruders angeordneten Werkzeug (1) bestehend aus einem Dorn (2) und einem diesen unter Belassung eines Durchtrittsspalts (4) für die Schmelze umgebenden Mantels (3), wobei der Dorn (2) aus einer in Extrusionsrichtung gesehen rückseitigen Stützhülse (6) und einem vorderseitigen Dornkopf (7) besteht, der mit einer rückseitigen Kalottenfläche (8) auf einem kreisförmigen, vorderseitigen Rand (9) der Stützhülse (6) kippbeweglich gehaltert ist und dessen größter Durchmesser (D) größer als der Außendurchmesser (d) der Stützhülse (6) ist, **dadurch gekennzeichnet, dass** der Dornkopf (7) derart auf der Stützhülse (6) gelagert ist, dass er allein durch die auf ihn aus der Schmelze wirkenden Kräfte verkippbar ist.

2. Vorrichtung nach Anspruch 1, **dadurch gekennzeichnet dass** der Dornkopf (7) die Form einer Halbkugelschale hat.

3. Vorrichtung nach Anspruch 1, **dadurch gekennzeichnet, dass** die in den Strömungsweg der Schmelze hineinragende Flankenfläche (17) des Dornkopfes (7) von einer Kugelfläche abweicht.

4. Vorrichtung nach einem der vorstehenden Ansprüche, **dadurch gekennzeichnet, dass** der Dornkopf (7) eine zentrale Ausnehmung (10) aufweist, die von einem axial und zentrisch von der Stützhülse (6) abragenden Zugstab (11) durchsetzt ist, auf dessen freies Ende zur Halterung des Dornkopfes (7) auf der Stützhülse (6) eine Kalotte (13) aufgeschoben ist, deren Kugelfläche (14) an einer Innenkugelfläche (15) des Dornkopfes (7) anliegt und über den Zugstab (11) druckbeaufschlagt ist.

5. Vorrichtung nach einem der vorstehenden Ansprüche, **dadurch gekennzeichnet, dass** der Dorn (2) aus einem hinteren Abschnitt (18) und einem vorderen, als Stützhülse zur Lagerung des Dornkopfes (7) ausgeführten Abschnitt (19) besteht, wobei der vordere Abschnitt (19) über eine kalottenartige Lagerung mit dem hinteren Abschnitt (18) derart verbunden ist, dass er allein durch die auf ihn aus der Schmelze wirkenden Kräfte radial verschwenkbar ist.

6. Vorrichtung nach Anspruch 5, **dadurch gekennzeichnet, dass** der Bodenbereich des vorderen Abschnitts (19) mit radialem Spiel in eine zylindrische Ausnehmung (20) des hinteren Abschnitts (19) eingreift, wobei das radiale Spiel so gewählt ist, dass der vordere Abschnitt (19) in Grenzen im hinteren Abschnitt (18) radial in allen Richtungen verschwenken kann.

7. Vorrichtung nach Anspruch 5 oder 6, **dadurch gekennzeichnet, dass** am hinteren Ende des vorderen Abschnitts (19) eine Halbkugelschale (22) ausgebildet ist, die in eine halbkugelförmige Ausnehmung (23) des hinteren Abschnitts (18) eingreift.

8. Vorrichtung nach Anspruch 7, **dadurch gekennzeichnet, dass** die Halbkugelschale (22) eine Öffnung (26) aufweist, durch die hindurch eine Schraube (24) in den hinteren Abschnitt (18) eingeschraubt ist, und dass auf die Schraube (24) eine Kalotte (25) aufgeschoben ist, deren Kugelfläche (27) an einer Innenkugelfläche (28) der Halbkugelschale (22) anliegt und über eine auf die Schraube (24) aufgeschraubte Mutter (29) druckbeaufschlagt ist.
